(19) Europäisches Patentamt
European Patent Office
Office européen des brevets

(11) Veröffentlichungsnummer: **0 268 037 B1**

(12) # EUROPÄISCHE PATENTSCHRIFT

(45) Veröffentlichungstag der Patentschrift: **29.01.92**

(51) Int. Cl.[5]: **C07C 69/732**, C07C 69/84, C08K 5/13

(21) Anmeldenummer: **87113587.7**

(22) Anmeldetag: **17.09.87**

(54) **Ester von 3-tert.-Butyl- bzw. 3-tert.-Butyl-5-alkyl-4-hydroxyphenyl-(alkan)-carbonsäuren mit Oxethylaten von Polyhydroxy-aromaten, Verfahren zu ihrer Herstellung und ihre Verwendung als Stabilisatoren.**

(30) Priorität: **18.11.86 DE 3639383**

(43) Veröffentlichungstag der Anmeldung:
**25.05.88 Patentblatt 88/21**

(45) Bekanntmachung des Hinweises auf die Patenterteilung:
**29.01.92 Patentblatt 92/05**

(84) Benannte Vertragsstaaten:
**BE CH DE FR GB IT LI NL**

(56) Entgegenhaltungen:
**EP-A- 0 102 920**
**EP-A- 0 181 023**
**EP-A- 0 212 496**
**CH-A- 515 065**

(73) Patentinhaber: **HÜLS AKTIENGESELLSCHAFT**
**Patentabteilung / PB 15 - Postfach 13 20**
**W-4370 Marl 1(DE)**

(72) Erfinder: **Küpper, Friedrich-Wilhelm, Dr.**
**Oderbruchstrasse 27**
**W-4370 Marl(DE)**
Erfinder: **Voges, Heinz-Werner, Dr.**
**Im Gorden 45**
**W-4270 Dorsten 21(DE)**
Erfinder: **Pätzold, Werner**
**Breddestrasse 13**
**W-4390 Gladbeck(DE)**
Erfinder: **Schaaf, Richard, Dr.**
**Johannesstrasse 47**
**W-4358 Haltern(DE)**

**EP 0 268 037 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind neue Ester von 3-tert.-Butyl- bzw. 3-tert.-Butyl-5-alkyl-4-hydroxyphenyl-(alkan)carbonbsäuren der Formel I

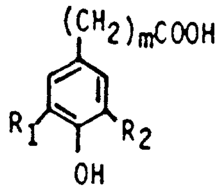

(I)

mit

$R_1$ = $-C(CH_3)_3$,
$R_2$ = H,$C_1$- bis $C_4$-Alkyl, vorzugsweise $-C(CH_3)_3$,
m = 0 bis 4, vorzugsweise 2,

mit Oxethylaten von Polyhydroxyaromaten mit 2 bis 6 Hydroxylgruppen der allgemeinen Formeln II und III, die maximal 6 Alkylenoxideineinheiten enthalten,

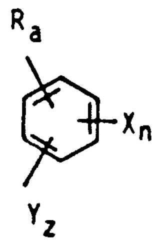

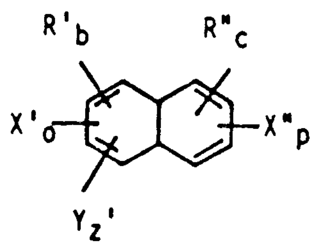

(II) (III)

mit

X = $(CH_2)_m$ OH
X' = $(CH_2)_r$ OH
X" = $(CH_2)_s$ OH
R,R',R" = H, Alkyl, Halogen

wobei m,r,s = 0 oder 1, vorzugsweise 0, sein können

Y = 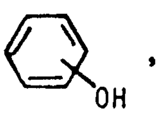 ,

z = 1, n = 2 bis 5, a = 5 - n (in Formel II) und
o + p = 2 bis 6, für z' = 0, vorzugsweise 2 oder 3 (in Formel III) und
o + p = 1 bis 5 für z' ≠ 0, vorzugsweise 2 oder 3 (in Formel III) und
$0 \leqq b, c, z' \leqq 4 \leqq 8 - (o + p)$ (in Formel III)

und die Verwendung derartiger Ester zur Stabilisierung von organischen Polymeren, vorzugsweise von Polyolefinen.

Es ist bekannt, daß organische Polymere, wie sie durch Polymerisation (bzw. Copolymerisation) von ggf. funktionelle Gruppen enthaltenden Mono- und Diolefinen oder durch Polykondensation geeigneter Vorstufen - beispielsweise von Diolen mit Dicarbonsäuren - erhalten werden, unter der Einwirkung von Luft/Sauerstoff, von Wärme, von Licht oder von energiereicher Strahlung Veränderungen erleiden können, die die anwendungstechnisch wichtigen Eigenschaften der Polymeren wie Festigkeit, Härte und Dehnung beeinträchtigen. Durch derartige Schädigungen tritt häufig nicht nur eine deutliche Veränderung der meßbaren physikalischen Eigenschaften ein, sondern es kommt zu einer auch visuell bemerkbaren Erweichung, Versprödung und/oder Verfärbung der Fertigteile. Aus diesem Grunde werden den entsprechenden Polymeren vor der Verarbeitung Stabilisatoren zugesetzt. Hinsichtlich näherer Einzelheiten verweisen wir auf die zusammenfassenden Arbeiten von G. Scott, "Atmospheric Oxidation and Antioxidants", Elsevier Publ. Co.; Amsterdam, Oxford, New York (1965); R. Gächter, H. Müller, "Taschenbuch der Kunststoff-Additive", C. Hanser-Verlag, München/Wien (1979); J. Pospisil in "Degradation and Stabilization of Polymers", (Edit.: H. Jellinek), Elsevier, Amsterdam, Oxford, New York (1983) S. 193 f.; P. P.Klemchuk et. al., "Polymer Degradation and Stabilization" 7 (1984) S. 131 f. Es ist auch bekannt, daß in Polyolefinen als Stabilisatoren vorzugsweise phenolische Hydroxylgruppen enthaltende Verbindungen verwandt werden und daß unter diesen Phenolderivaten Substanzen mit voluminösen Alkylgruppen, vorzugsweise mit tert. Butylsubstituenten, in mindestens einer ortho-Stellung zur phenolischen Hydroxylgruppe eine besonders gute Wirksamkeit aufweisen. Unter der Vielzahl der beschriebenen Stabilisatoren (vgl. z. B. J. C. Johnson, "Antioxidants Noyes Data Corp., 1975; M. W. Ramsey, "Antioxidants-Recent Developments", Noyes Data Corp., 1979; M. T. Gillies, "Stabilizers fo Synthetic Resins", Noyes Data Corp., Park Ridge, N. J., 1983) sind auch Ester zu finden. Ester von 3,5-Dialkyl-4-hydroxy-phenyl-(alkan)carbonsäuren werden beispielsweise in den US-PSS 3 681 431, 3 330 859 3 644 482, 3 285 855, Ester der 4,6-Dialkyl-3-hydroxyphenyl-(alkan)carbonsäuren in den US-PSS 3 988 363, 3 862 130 und Ester der 2-Methyl-4-tert.butyl-5-hydroxyphenylalkan-carbonsäuren in der EP-PS 0.048.841 beschrieben.

Weiterhin werden auch Ester von 3,5-Di-tert.-butyl-4-hydroxy-phenylpropionsäure mit z. B. Pyrogallol, Gallussäure oder 1,4-Bis-(2-hydroxyethoxy)-benzol sowie Amide der genannten Säure mit z. B. p-Phenylendiamin oder p-Aminophenol gemäß EP-A 181 023 beschrieben. Biphenylverbindungen oder bicyclische Aromaten werden dort nicht genannt.

Die Wirkung der phenolischen Stabilisatoren läßt sich durch Zusatz bestimmter, meist schwefel- oder phosphorhaltiger Verbindungen häufig noch weiter steigern. Das optimale Mengenverhältnis von Stabilisator und Synergist ist im Einzelfall stets experimentell zu ermitteln.

Sowohl für die Stabilisatoren als auch für die Synergisten gilt, daß sie sich ohne Schwierigkeiten unzersetzt in die verschiedenen Polymeren einarbeiten und darin möglichst gleichmäßig verteilen lassen sollten. Andererseits sollte sich das Polymer bei den erforderlichen hohen Einarbeitungstemperaturen weder durch Zusätze verfärben noch durch die Temperatur- und Scherbeanspruchung einen Molekulargewichtsabbau erleiden.

Die Aufgabe der Erfindung bestand darin, ausgehend von an sich bekannten 3-tert.-Butyl- bzw. 3-tert.-Butyl-5-alkyl-4-hydroxyphenyl(alkan)carbonsäuren bzw. deren Derivaten, vorzugsweise von 3,5-Di-tert.butyl-4-hydroxyphenylpropionsäure(derivaten), durch Umsetzung mit ausgewählten, wirtschaftlich herzustellenden Alkoholen zu Estern dieser 3-tert.-Butyl- bzw. 3-tert.-Butyl-5-alkyl-4-hydroxyphenyl-(alkan-)carbonsäuren der Formel I mit verbesserten Stabilisatoreigenschaften zu gelangen und durch Einarbeitung dieser Ester in organische Polymere, vorzugsweise in Polypropylen und Polyethylen, eine gute Stabilisierung derartiger Polymerer gegen Molekulargewichtsabbau bei der Verarbeitung oder beim Einsatz über längere Zeit zu erreichen, ohne daß eine nennenswerte Verfärbung als Folge des Stabilisatorzusatzes bei diesen Beanspruchungen eintritt.

Die Lösung dieser Aufgabe gelingt überraschend, wenn die leicht zugänglichen Oxethylate von Polyhydroxyaromaten mit 2 bis 6, vorzugsweise 2 oder 3, Hydroxylgruppen der allgemeinen Formeln II und III, vorzugsweise der Formel II, und mit vorzugsweise einer Alkylenoxideinheit pro Hydroxylgruppe in Ester von 3-tert.-Butyl- bzw. 3-tert.-Butyl-5-alkyl-4-hydroxyphenyl-(alkan)carbonsäuren überführt werden und diese, die (Poly-)Oxethylate als Alkoholkomponente enthaltenden Ester zur Stabilisierung organischer Polymerer, vorzugsweise von Polyolefinen, eingesetzt werden. Bevorzugt eingesetzt werden Ester, in denen sämtliche Hydroxylgruppen der Polyhydroxyaromaten mit je einem Alkylenoxid, vorzugsweise Ethylenoxid, oxethyliert wurden und in denen sämtliche der dabei entstandenen 2-Hydroxy-(2-alkyl-)ethylethergruppen verestert sind. Ganz besonders bevorzugt werden Ester der 3-(3,5-Di-tert.butyl-4-hydroxyphenyl-)propionsäure mit Poly-(monooxethylaten) (Poly-(2-hydroxyethylethern)) von Polyhydroxyaromaten der Formeln II und III.

Diese Lösung der Aufgabe ist außerordentlich überraschend, da der leichte Angriff von Sauerstoff an den zur Etherbindung benachbarten primären und sekundären Kohlenstoff-Atomen gerade bei Alkyl(en)reste enthaltenden Ethern rasch zur Bildung von Hydroperoxiden führt, die oft bereits bei etwas erhöhten Temperaturen zerfallen und eine sorgfältige Reinigung zur Entfernung solcher Hydroperoxide vor der Verwendung von Ethern erfordern (vgl. Houben-Weyl, "Methoden der organ. Chemie", Band VI/3). Es war daher nicht vorherzusehen, daß mit den erfindungsgemäßen Estern auf der Grundlage von Oxethylaten von Polyhydroxyaromaten (nach Formel II bzw. III) bei den hohen Temperaturen der Polyolefin-Verarbeitung einzumischende Stabilisatoren mit guter Wirksamkeit und überraschend geringer Verfärbung der damit versehenen Polymermaterialien erhalten werden können. Dies überrascht um so mehr, da nach dem Stand

der Technik, z. B. nach US-PS 3 285 855, herstellbare, im Handel erhältliche Ester von Dialkyl-4-hydroxyphenyl-alkan-carbonsäuren mit ethergruppenhaltigen alpha,omega-Bis-hydroxyethyl(poly-)oxa-alkanen der Formel VI

$HO(CH_2)_n\,(O(CH_2)_m)_pO(CH_2)_lOH$ (VI)
mit m, n, l = 2
p ≧ 0

in Polyolefinen zu Verfärbungen führen, so daß derartige Produkte für dieses wichtige Einsatzgebiet nicht empfohlen werden.

Die erfindungsgemäß vorzugsweise in Polypropylen und Polyethylen als Stabilisatoren einzusetzenden Ester sind neue Verbindungen, deren Charakterisierung durch Schmelzpunkte und spektroskopische Untersuchungen den angefügten Beispielen zu entnehmen ist. Solche kristallinen Verbindungen sind gegenüber flüssigen Stabilisatoren sind bevorzugt, da ihre gleichmäßige Verteilung im Polymeren und der kontinuierliche Zusatz der notwendigen kleinen Mengen i. a. geringere Schwierigkeiten bereiten.

Die Herstellung der erfindungsgemäßen, nicht vorbeschriebenen Ester kann nach an sich bekannten Verfahren durch Umsetzung der Carbonsäuren bzw. geeigneter reaktiver Säurederivate mit den durch Oxethylierung der erwähnten Ausgangsstoffe zugänglichen polyfunktionellen Alkoholen erfolgen. Diese sollten mindestens zwei, vorzugsweise ≧ 2, Alkylenoxideinheit(en) enthalten, d. h. mindestens zwei Etherbrücken aufweisen, wobei diese Etherbrücken von ≧ 2 verschiedenen Hydroxyarylgruppen ausgehen sollten. Zur Oxethylierung können die bekannten

Verfahren des Standes der Technik (vgl. z. B. M. J. Schick "Nonionic Surfactants", Marcel Dekker, New York (1967), Vol. I, S. 57 ff.) angewandt werden, nach denen Alkylenoxide der Formel V

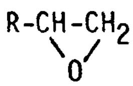 (R = H, $C_1$-$C_4$-Alkyl, Aryl) (V)

an die entsprechenden Ausgangsstoffe der Formeln II oder III angelagert werden. Anlagerungsprodukte von Ethylenoxid, d. h. R = H in Formel V, sind als Ausgangsmaterialien der erfindungsgemäßen Ester von 3-tert.-Butyl- bzw. 3-tert.-Butyl-5-alkyl-4-hydroxyphenyl-(alkan)carbonsäuren bevorzugt. Besonders geeignet sind Oxethylate von Polyhydroxyaromaten der Formeln II und III, die eine Ethylenoxideinheit (als 2-Hydroxyethoxygruppe) pro Hydroxylgruppe der Polyhydroxyaromaten, wie solche der Formel II mit 2 Hydroxylgruppen, enthalten. Ganz besonders geeignet sind Bis-(monooxethylate) des 2,6- bzw. des 1,5-Naphthalindiols, des 4,4'-Dihydroxy-biphenyls, des 2,2'-Dihydroxy-biphenyls, d. h. 1,6- bzw. 1,5-Bis-(2-hydroxyethoxy-)naphthalin, 4,4'- und 2,2'-Bis-(2-hydroxyethoxy-)biphenyl. Ganz besonders bevorzugte Vorstufen sind Poly-(monooxethylate von Polyhydroxyaromaten, in denen sämtliche phenolischen Hydroxylgruppen durch Einwirkung von Ethylenoxid in 2-Hydroxyethylether-substituenten umgewandelt wurden. Derartige Poly-(2-hydroxyethyloxy-)aromaten sind nicht für alle den Formeln II bzw. III entsprechenden Polyhydroxyaromaten vorbeschrieben. Die Abtrennung der gewünschten Poly-(monooxethylate) von ggf. bei der Oxethylierung entstandenen Nebenprodukten wie z. B. Polyglykolen oder höheren Oxethylaten kann nach bekannten Verfahren des Standes der Technik, d. h. durch Kristallisation aus geeigneten Lösemitteln (wie Alkoholen oder Ethern), durch Säulenchromatographie oder - in Einzelfällen - durch Destillation unter vermindertem Druck erfolgen.

Die Herstellung der erfindungsgemäßen Ester ist besonders einfach, wenn die Poly-(monooxethylate) mit Estern der 3-tert.-Butyl- bzw. 3-tert.-Butyl-5-alkyl-4-hydroxyphenyl-(alkan-)carbonsäuren der Formel I, vorzugsweise mit Estern der 3,5-Di-tert.butyl-4-hydroxyphenylpropionsäure, die Alkoxygruppen mit ein bis vier C-Atomen enthalten, unter Freisetzung und Entfernung der leichter flüchtigen Alkohole umgeestert werden.

Die Umesterung wird im allgemeinen bei erhöhter Temperatur, vorzugsweise unterhalb von 120 °C, durchgeführt. Die direkte Umsetzung von Polyol und Niedrigalkylester ist häufig der wirtschaftlichste Weg, doch kann auch in Gegenwart inerter Löse- und/oder Schleppmittel zur Abtrennung des freiwerdenden Alkohols gearbeitet werden. Zur Beschleunigung der Umesterung werden (vorzugsweise basische oder neutrale) Katalysatoren nach dem Stand der Technik verwandt wie z.B. Natriummethylat, Lithiumamid, Kalium-tert.butylat, Titantetrabutylat, Aluminiumtriisopropylat u.a.. Diese werden im allgemeinen in Mengen von 0.1 bis 5 Gew.-%, bezogen auf das Gewicht des Reaktionsgemisches zugesetzt, wobei Mengen von 0.5 bis 1.5 Gewichtsprozent aus Gründen der Reaktionsgeschwindigkeit und der Kosten bevorzugt sind.

Zweckmäßigerweise wird die Umesterung unter Inertgas oder bei vermindertem Druck durchgeführt, um

Oxidationen von Einsatz- bzw. Umsetzungsprodukten zu vermeiden und um die thermische Belastung des Reaktionsgemisches, vor allem in Gegenwart der Umesterungskatalysatoren, gering zu halten. Es ist von Vorteil, einen der Einsatzstoffe in 10- bis 20 %igem molaren Überschuß über die erforderliche stöchiometrische Menge hinaus zu verwenden. Die Umsetzung wird unterbrochen, sobald durch Analyse des Reaktionsgemisches oder durch Wägung des abgetrennten Alkohols weitgehender (bzw. vollständiger) Verbrauch der im Unterschuß eingesetzten Komponente nachgewiesen ist. Dazu wird der Katalysator inaktiviert (d. h. bei basischen oder neutralen Katalysatoren z.B. durch Zusatz einer äquivalenten Säuremenge zerstört), das Reaktionsgemisch aufgearbeitet und die Polyol-ester durch Umkristallisieren aus geeigneten Lösungsmitteln wie z. B. Alkoholen, Ethern oder aromatischen Kohlenwasserstoffen gereinigt. Anschließend wird die Konstitution der Verbindungen $^1$H-NMR-spektroskopisch an Hand der Lage und Intensität der verschiedenen Signale gesichert.

Die erfindungsgemäßen 3-tert.-Butyl- bzw. 3-tert.-Butyl-5-alkyl-4-hydroxyphenyl-(alkan)carbonsäureester von Poly-(2-hydroxyethyloxa-) bzw. Poly-(2-hydroxyethyloxamethyl-)aromaten sind wertvolle Stabilisatoren für Polymere, vorzugsweise für (Co-)Polymerisate von Mono- und/oder Diolefinen, insbesondere von Polypropylen und Polyethylen. Sie können als Verarbeitungsstabilisatoren, aber auch als Langzeitstabilisatoren verwandt werden. Das Einmischen in die Polymeren kann nach bekannten Verfahren des Standes der Technik durch Vermischen der pulverförmigen Polymeren mit den Stabilisatoren oder mit einem Stabilisatorkonzentrat (in dem jeweiligen Polymeren) erfolgen. Der Stabilisatorzusatz kann aber auch in eine Suspension, Emulsion oder Lösung der Polymeren vor der Aufarbeitung eingebracht werden. Die Stabilisatoren werden im allgemeinen in Mengen von ca. 0,02 bis 3 Gewichtsprozent des zu stabilisierenden Materials verwandt, doch schwankt die vom Fachmann leicht zu ermittelnde optimale Menge in Abhängigkeit vom zu stabilisierenden Polymeren und der Art der Beanspruchung. Ein vorteilhafter Bereich liegt bei 0,05 bis 2 Gewichtsprozent Stabilisatorzusatz, ganz besonders günstig sind bei Polyolefinen Zusätze von 0,1 bis 1 Gewichtsprozent. Dabei können wahlweise einzelne Ester, aber auch Gemische mehrerer zugesetzt werden. Ferner können verschiedene weitere Zusatzstoffe wie z.B. organische schwefel und/oder phosphorhaltige Verbindungen als Synergisten, aber auch nicht erfindungsgemäße Stabilisatoren, Weichmacher, Pigmente, UV-Stabilisatoren, Antistatika, Füllstoffe und/oder Verarbeitungshilfsmittel wie Calciumstearat zusätzlich in die Polymeren eingearbeitet werden.

Die erfindungsgemäße Stabilisierung von Polymeren, die im Falle der Polyolefine nach dem Spritzguß- bzw. Extrusionsverfahren zu vielseitig verwendbaren Fertigteilen verarbeitet werden können, wird durch die folgenden Beispiele näher erläutert.

Beispiel 1

1.1 Herstellung von 1,5-Bis-(2-hydroxyethoxy-)naphthalin (nicht erfindungsgemäß)

Es werden 2,0 Mol (322 g) Naphthalindiol-(1,5),gelöst in 1 160 g Diethylenglykoldimethylether, in Gegenwart katalytischer Mengen Natriumhydroxid mit Ethylenoxid in das 1,5-Bis-(2-hydroxyethoxy-)naphthalin überführt. Das erhaltene Rohprodukt wird durch Umkristallisation (aus Butanol) von anhaftenden Verunreinigungen befreit.
Ausbeute: 290 g (= 71 % d. Th.) 1,5-Bis-(2-hydroxyethoxy)-naphthalin
Schmelzpunkt: 172 bis 174 °C
Reinheit: ca. 90 % (lt. $^1$H-NMR-Spektrum)
Das $^1$H-NMR-Spektrum bestätigt die Konstitution des Diols.

1.2 Di-{3-(3,5-ditert.butyl-4-hydroxyphenyl-)propionsäure-}ester des 1,5-Bis-(2-hydroxyethoxy-)naphthalins

Es werden 0,27 Mol (67 g) 1,5-Bis-(2-hydroxyethoxy-)naphthalin in Gegenwart von 0,076 Mol (4,1 g) Natriummethylat mit 0,58 Mol (169,6 g) 3-(3,5-Ditert.butyl-4-hydroxyphenyl-)propionsäuremethylester umgeestert. Nach analoger Aufarbeitung und Umkristallisieren des erhaltenen nichtflüchtigen Rückstandes aus Toluol wird der erfindungsgemäße Di-ester des 1,5-Bis-(2-hydroxyethoxy-)naphthalins in Form farbloser Kristalle erhalten.
Ausbeute: 144 g (= 70 % d. Th.)
Schmelzpunkt: 157 bis 159 °C (aus Toluol)
Reinheit: = ca. 90 % (lt. $^1$H-NMR)
Die Konstitution des Diesters wird durch Lage und Intensität der Absorptionslinien des $^1$H-NMR-Spektrums bestätigt. (Vgl. Tabelle I hinsichtlich näherer Einzelheiten.)

1.3 Di-3-{3,5-ditert.butyl-4-hydroxyphenyl-)propionsäure-}ester des 1,5-Bis-2-(hydroxyethoxy-)naphthalins

Beispiel 1.2 wird mit dem Unterschied wiederholt, daß als Umesterungskatalysator anstelle von Natriummethylat 0,02 Mol (6,2 g) Titantetrabutylat eingesetzt werden. Nach analoger Aufarbeitung wird der erfindungsgemäße Diester erhalten.
Ausbeute: 148 g (= 72 % d. Th.)
Schmelzpunkt: 156 bis 158 °C

Beispiel 2

2.1 Herstellung von 4,4'-Bis-(2-hydroxyethoxy-)biphenyl (nicht erfindungsgemäß)

1,5 Mol (280 g) 4,4'-Dihydroxy-biphenyl werden in 1263 g Diethylenglykoldimethylether gelöst und nach Zusatz von katalytischen Mengen Natriumhydroxid mit Ethylenoxid bei 170 °C zum 4,4'-Bis-(2-hydroxyethoxy-)biphenyl oxethyliert. Nach Aufarbeitung wird das Diol mit einem Schmelzpunkt von 201 bis 202 °C (aus Tetrahydrofuran/Cyclohexanon) erhalten. Das $^1$H-NMR-Spektrum bestätigt die Konstitution des Diols.
Ausbeute: 255 g (= 62 % d. Th.)
Reinheit: größer 90 % (lt. $^1$H-NMR-Spektrum)

2.2 Di-{3-(3,5-ditert.butyl-4-hydroxyphenyl-)propionsäure-}ester des 4,4'-Bis-(2-hydroxyethoxy-)biphenyls

Es werden 0,28 Mol (75,9 g) 4,4'-Bis-(2-hydroxyethoxy)biphenyl mit 0,58 Mol (169,6 g) 3-(3,5-Di-tert.butyl)-4-hydroxyphenyl)propionsäuremethylester unter Zusatz von 0,076 Mol (4,1 g) Natriummethylat umgeestert. Nach 6stündiger Reaktion bei 150 °C unter Entfernen des freiwerdenden Methanols wird aufgearbeitet, der nichtflüchtige Rückstand zur Kristallisation gebracht und das Rohprodukt durch Umkristallisieren gereinigt.
Ausbeute: 147 g (= 67 % d. Th.)
Schmelzpunkt: 111 bis 112,5 °C (aus Ethanol)
Reinheit: 93 % (lt. TLC)
Das $^1$H-NMR-Spektrum bestätigt die Konstitution des erfindungsgemäßen Di-esters (vgl. Tabelle I).

Beispiel 3

3.1 Herstellung von 2,2'-Bis-(2-hydroxyethoxy-)biphenyl (nicht erfindungsgemäß)

Beispiel 2.1. wird mit dem Unterschied wiederholt, daß anstelle von 4,4'-Dihydroxy-biphenyl das ebenfalls im Handel erhältliche 2,2'-Dihydroxy-biphenyl mit Ethylenoxid zum 2,2'-Bis-(2-hydroxyethoxy-)biphenyl oxethyliert wird. Das $^1$H-NMR-Spektrum bestätigt die Konstitution des Diols.
Ausbeute: 68 % d. Th.
Schmelzpunkt: 56 bis 57 °C (aus Diethylether)
Reinheit: ca. 90 % (lt. $^1$H-NMR-Spektrum)

3.2 Di-[3-(3,5-ditert.butyl-4-hydroxyphenyl-)propionsäure-]ester des 2,2'-Bis-(2-hydroxyethoxy-)biphenyls

Beispiel 2.2. wird mit dem Unterschied wiederholt, daß als Einsatzprodukt anstelle von 4,4'-Bis-(2-hydroxyethoxy-)biphenyl die isomere Verbindung 2,2'-Bis-(2-hydroxyethoxy-)biphenyl verwandt wird. Nach analoger Reaktionsführung und Aufarbeitung kann der erfindungsgemäße Diol-diester isoliert werden. Das $^1$H-NMR-Spektrum bestätigt die Konstitution der erfindungsgemäßen neuen Verbindung (vgl. Tabelle I).
Ausbeute: 86 g (= 61 % d. Th.)
Schmelzpunkt: 94 bis 95 °C (aus Ethanol)

Beispiele 4 bis 6 (erfindungsgemäß) sowie 7 bis 10 (Vergleichsversuche)

2 kg Polypropylen-Pulver werden mit 0,1 Gewichtsprozent der in Tabelle II angegebenen Stabilisatoren (erfindungsgemäße Ester nach Beispiel 1 bis 3 bzw. Stabilisatoren nach dem Stand der Technik (Beispiele 7 bis 10) mit 0,1 Gewichtsprozent Calciumstearat als Verarbeitungshilfsmittel sowie mit den in Tabelle II angegebenen Mengen an Bis-(octadecyl-)thiodipropionsäureester und ggf. an Tris-(2,4-di-tert.butylphenyl-)phosphit versetzt und in einem Mischaggregat (z. B. Fluid-Mischer der Fa. Papenmeier) bei Raumtemperatur vermischt. Die erhaltenen Pulvermischungen werden bei 100 Upm und maximal 230 °C mit einem Extruder (Fa. Tröster, d = 30 mm, l = 20 d) extrudiert und anschließend granuliert. Das Granulat wird bei 210 °C zu 1 mm dicken Platten verpreßt und aus diesen Polyolefinstreifen mit den Maßen 1x10x100 mm gestanzt. Letztere werden in einer geeigneten Vorrichtung bei 145 °C freistehend in einem Umlufttrockenschrank unter Luftzutritt solange gelagert, bis als Zeichen eintretender Versprödung ein Zerbröseln der Prüfkörper bzw. Rißbildung an diesen zu beobachten ist. Tabelle II enthält die Ergebnisse.

An der bei 145 °C ermittelten Reständigkeit stabilisierter Polypropylenproben erkennt man, daß die Wirkung der erfindungsgemäß einzuarbeitenden Ester das Niveau von Proben erreicht oder übertrifft, bei denen Stabilisatoren nach dem Stand der Technik zugesetzt wurden.

Beispiele 11 bis 15
(Beispiele 14 und 15 nicht erfindungsgemäß)

Nach den Beispielen 4 bis 6 sowie 8 bis 10 hergestelltes, erfindungsgemäße Stabilisatoren bzw. Stabilisatoren nach dem Stand der Technik enthaltendes Polypropylenpulver wurde auf einem Extruder (Fa. Brabender; d = 19 mm, l = 20 d) mehrfach (bei 30 Upm und einer Temperatur von maximal 270 °C) extrudiert. Anhand der nach jedem Extrusionsschritt gemessenen $I_5$-Werte (bei 190 °C) wurde geprüft, in welchem Ausmaß ein Molekulargewichtsabbau des Polypropylens während der Verarbeitung eintritt. Tabelle III enthält die ermittelten $I_5$-Werte.

Man erkennt an den Beispielen, daß mit den erfindungsgemäßen Stabilisatoren (vgl. Beispiele 11 bis 13) der durch die Vergleichsbeispiele 14 und 15 vorgegebene Stand der Technik in den meisten Fällen erreicht bzw. - je nach Vergleichsbeispiel - übertroffen wird. Ein gleiches Verhalten ist bei Zusatz geringer Mengen an Synergisten (0,1 Gewichtsprozent Bis-(octadecyl-)thiodipropionsäureester bzw. Tris-(2,4-ditert.butylphenyl-)phosphit) zu beobachten.

Beispiele 16 bis 21
(Beispiele 19 bis 21 nicht erfindungsgemäß)

0,1 Gewichtsprozent erfindungsgemäße Stabilisatoren (nach Beispiel 1 bis 3) enthaltendes, nach Beispiel 4 bis 6 hergestelltes Polypropylengranulat, dem 0,1 Gewichtsprozent Calciumstearat als Verarbeitungshilfsmittel zugesetzt waren, wurde bei 210 °C zu Platten (Maße 4 x 10 x 100 mm) verpreßt. Diese wurden vier Wochen bei 100 °C gelagert und anschließend hinsichtlich evtl. Farbänderungen visuell beurteilt. Als Vergleichsproben dienten analog hergestellte und bei 100 °C gealterte Polypropylenplatten, die Stabilisatoren nach dem Stand der Technik (Beispiele 19 bis 21: Mono-, Bis- bzw. Tetra-(3-(3,5-ditert.butyl-4-hydroxyphenyl-)propionsäure-)ester des Octadecanols (Beispiel 19), des Thiodiethanols (Beispiel 20) und des Pentaerythrits (Beispiel 21) enthielten. Die in Tabelle IV zusammengestellten, visuell ermittelten Farbeindrücke sind auf das Vergleichsbeispiel 21 bezogen.

Man erkennt an den Prüfergebnissen, daß - mit einer Ausnahme - mit den erfindungsgemäßen Stabilisatoren das Niveau des Standes der Technik erreicht bzw. - bei Wahl einer anderen Bezugssubstanz - in allen Fällen übertroffen wird.

Tabelle IV

| Beispiel Nr. | Polypropylen nach Beispiel Nr. | | Farbbeurteilung* (nach 28 Tagen bei 100 °C) |
|---|---|---|---|
| 16 | 4 | | 0 |
| 17 | 5 | | 0 |
| 18 | 6 | | 0 |
| 19 | 8 | Stand | (+) |
| 20 | 9 | der | - - |
| 21 | 10 | Technik | 0 |

*Beurteilung:

- 0 ebenso gut wie Stabilisierung nach Beispiel 29
- (+)/(-) etwas besser/schlechter als Stabilisierung nach Beispiel 29
- +/- besser/schlechter als Stabilisierung nach Beispiel 29
- ++/-- wesentlich besser/schlechter als Stabilisierung nach Beispiel 29

Tabelle I: $^1$H-NMR-Spektren von 3-(3,5-Ditert.-butyl-4-hydroxyphenyl-)propionsäureestern von Oxethylaten verschiedener Poly-hydroxyaromaten

| Ester nach nach Beispiel Nr. | Resonanzlinien der $^1$H-NMR-Spektren * (in ppm) (Zuordnung lt. Strukturformel ** der erfindungsgemäßen Ester) 1 | 2 | 3 | 4 | 5 | 6 | 7 | 8 | 9 | 10 |
|---|---|---|---|---|---|---|---|---|---|---|
| 1 | 6,99 (4) | 5,07 (2) | 4,58 (4) | 4,32 (4) | 2,90 (4) | 2,67 (4) | 1,42 (36) | 7,87 (2) | 7,35 (2) | 6,83 (2) |
| 2 | 6,99 (4) | 5,85 (2) | 4,41 (4) | 4,22 (4) | 2,85 (4) | 2,61 (4) | 1,40 (36) | | 7,51 (4) | 7,05 (4) |
| 3 | 6,97 (4) | 5,08 (2) | 4,27 (4) | 4,11 (4) | 2,78 (4) | 2,51 (4) | 1,42 (36) | | 7,27 (4) | 6,98 (4) |

Erläuterungen * gemessen in $CDCl_3$ gegen TMS (intern); Konz. ca. 20 Vol.-% angegeben sind die Signallagen in ppm (mit TMS = 0 ppm) und die Anzahl der zugehörigen H-Atome (jeweils in Klammern)

** Zuordnung der Signale:

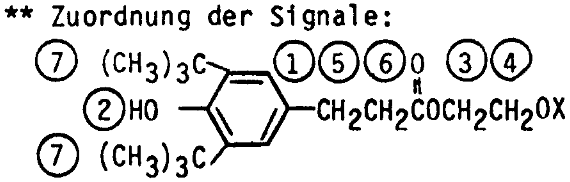

mit X =

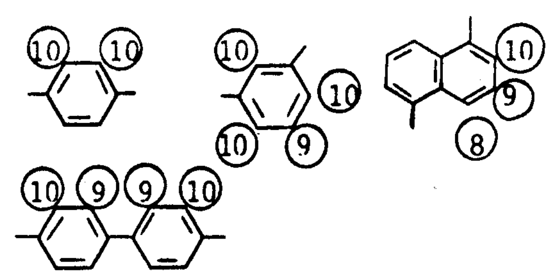

Tabelle II: Alterungsversuche bei 145 °C unter Zusatz erfindungsgemäßer Stabilisatoren zu Polypropylen

| Beispiel Nr. | Stabilsator nach Beispiel Nr. | Formel der Stabilisatoren | Alterungsbeständigkeit bei 145 °C (Tage) | | |
|---|---|---|---|---|---|
| | | | A* | B* | C* |
| 4 | 1 | 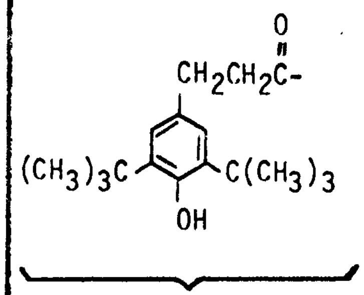 Abk. = X 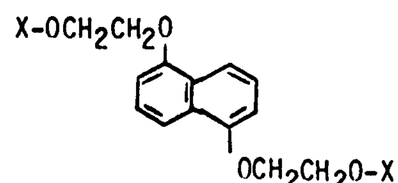 | 17 | 40 | 37 |

Fortsetzung Tabelle II (2. Teil)

| Beispiel Nr. | Stabilsator nach Beispiel Nr. | Formel der Stabilisatoren | Alterungsbeständigkeit bei 145 °C (Tage) | | |
|---|---|---|---|---|---|
| | | | $A^*$ | $B^*$ | $C^*$ |
| 5 | 2 | $X-OCH_2CH_2O$ 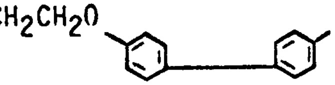 $OCH_2CH_2O-X$ | 18 | 41 | 43 |
| 6 | 3 | 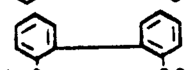 $X-OCH_2CH_2O$ $OCH_2CH_2O-X$ | 19 | 35 | 38 |
| 7 | nicht erfindungsgemäße Versuche | $CH_3$ $(CH_3)_3C$ 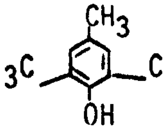 $C(CH_3)_3$ OH | 2 | 7 | 7 |
| 8 | | $C_{18}H_{37}O - X$ | 7 | 11 | 11 |
| 9 | | $X-OCH_2CH_2SCH_2CH_2O-X$ | 11 | 18 | 27 |
| 10 | | $C(CH_2O-X)_4$ | 27 | 43 | 47 |

* A = 0.1 Gew.-% Antioxidans als Zusatz

B = wie A und zusätzlich 0.1 Gew.-% Bis-(octadecyl-)thiodipropionsäureester

C = wie B und zusätzlich 0.1 Gew.-% Tris-(2,4-ditert.butylphenyl-)phosphit

Tabelle III: Mehrfachextrusion stabilisierter Polypropylenproben

| Beispiel Nr. | Polypropylen (bzw. Stabilisator) nach Beispiel Nr. | MFI-Werte (g/10 Min) nach Mehrfachextrusion ohne Zusatz von Synergisten * | | | | | mit Zusatz von Synergisten ** | | | | |
|---|---|---|---|---|---|---|---|---|---|---|---|
| | | 0 x | 1 x | 2 x | 3 x | 4 x | 0 x | 1 x | 2 x | 3 x | 4 x |
| 11 | 4 (1) | 5,3 | 15 | 21 | 24 | 33 | 3,7 | 7,0 | 9,5 | 13 | 17 |
| 12 | 5 (2) | 4,2 | 14 | 21 | 28 | 39 | 3,4 | 6,2 | 8,9 | 13 | 16 |
| 13 | 6 (3) | 4,1 | 13 | 20 | 28 | 39 | 3,6 | 6,0 | 7,9 | 10 | 14 |
| 14 | 8 Vergleichsvers. | 6,3 | 25 | 37 | 53 | 76 | 3,6 | 7,7 | 11 | 15 | 21 |
| 15 | 10 (Stand der Technik) | 4,8 | 13 | 19 | 26 | 30 | 3,6 | 6,4 | 9,3 | 12 | 16 |

* Proben mit 0,1 Gewichtsprozent Stabilisator und 0,1 Gewichtsprozent Calciumstearat

** Proben enthalten zusätzlich 0,1 Gewichtsprozent Bis-(octadecyl-)thiodipropionsäureester und 0,1 Gewichtsprozent Tris-(2,4-ditert.butylphenyl-)phosphit

Beispiel 22

22.1 Herstellung von 2,6-Bis-(2-hydroxyethoxy-)naphthalin (nicht erfindungsgemäß)

Es werden 1,26 Mol (202 g) Naphthalindiol-(1,5), gelöst in 478 g Diethylenglykoldimethylether, in Gegenwart katalytischer Mengen Natriumhydroxid mit Ethylenoxid in das 2,6-Bis-(2-hydroxyethoxy-)naphthalin überführt. Das erhaltene Rohprodukt wird durch Umkristallisation (aus Butanol) von anhaftenden Verunreinigungen befreit.
Schmelzpunkt: 179 bis 181 °C.
Das $^1$H-NMR-Spektrum bestätigt die Konstitution des Diols.

22.2 Di-[3-(3,5-di-tert.butyl-4-hydroxyphenyl-)propionsäure-]ester des 2,6-Bis-(2-hydroxyethoxy-)naphthalins

Es werden 0,18 Mol (44,9 g) 2,6-Bis-(2-hydroxyethoxy-)naphthalin in Gegenwart von 0,01 Mol (3,5 g) Titantetrabutylat binnen 8 Stunden mit 0,42 Mol (123,4 g) 3-(3,5-Di-tert.butyl-4-hydroxyphenyl-)propionsäuremethlester umgeestert. Nach Aufarbeitung und Umkristallisation des erhaltenen nichtflüchtigen Rückstandes aus Toluol wird der erfindungsgemäße Di-ester des 1,5-Bis-(2-hydroxyethoxy-)naphthalins in Form farbloser Kristalle erhalten.
Ausbeute: 148 g ( = 72 % d. Th.)
Schmelzpunkt: 123 bis 124 °C (aus Toluol)
Reinheit: ≧ 95 % (lt. $^1$H-NMR)
Die Konstitution des Diesters wird durch Lage und Intensität der Absorptionslinien des $^1$H-NMR-Spektrums bestätigt. Resonanzlinien in ppm/Zuordnung analog zu Strukturformel Tabelle 1**

mit X = 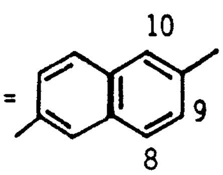

1: 6,90/4 2: 4,9/2 3: 4,4/4 4: 4,2/4 5: 2,8/4 6: 2,6/4 7: 1,4/36 8: 7,5/2 9: 7,02/2 10: 6,97/2

## Patentansprüche

1. Ester der 3-tert.-Butyl- bzw. 3-tert.-Butyl-5-alkyl-4-hydroxyphenyl-(alkan)carbonsäuren der Formel I

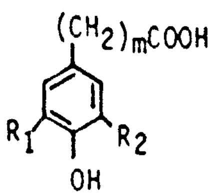

(I)

mit
$R_1$ = $-C(CH_3)_3$,
$R_2$ = H,$C_1$- bis $C_4$-Alkyl, vorzugsweise $-C(CH_3)_3$,
m = 0 bis 4, vorzugsweise 2,

mit Oxethylaten von Polyhydroxyaromaten mit 2 bis 6 Hydroxylgruppen der allgemeinen Formeln II und III, die maximal 6 Alkylenoxideineinheiten enthalten,

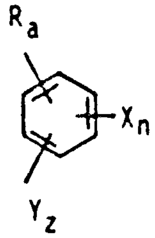 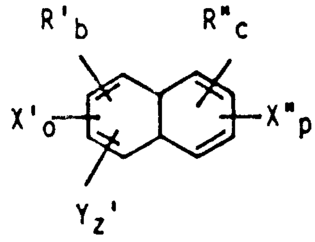

(II) (III)

mit

X = $(CH_2)_m$ OH

X' = $(CH_2)_r$ OH

X" = $(CH_2)_s$ OH

R,R' ,R" = H, Alkyl, Halogen

wobei m,r,s = 0 oder 1, vorzugsweise 0, sein können

Y = 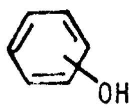 ,

z = 1, n = 2 bis 5, a = 5 - n (in Formel II) und

o + p = 2 bis 6, für z' = 0, vorzugsweise 2 oder 3 (in Formel III) und

o + p = 1 bis 5 für z' ≠ 0, Vorzugsweise 2 oder 3 (in Formel III) und

0 ≦ b, c, z' ≦ 4 ≦ 8 - (o + p) (in Formel III).

**2.** Ester der 3-(3,5-Ditert.butyl-4-hydroxyphenyl-)propionsäure der Formel I

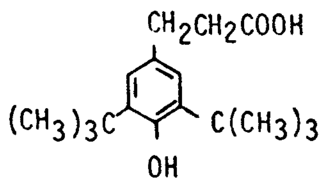

(Ia)

mit Oxethylaten von Polyhydroxyaromaten mit 2 bis 6 Hydroxylgruppen der allgemeinen Formeln II und III, vorzugsweise mit m, r, s = 0.

**3.** Ester nach Anspruch 1 und 2
mit Oxethylaten von Polyhydroxyaromaten der Formeln II und III, die eine Ethylenoxideinheit (als 2-Hydroxyethoxygruppe) pro Hydroxylgruppe der Polyhydroxyaromaten, vorzugsweise solche der Formel II mit 2 oder 3 Hydroxylgruppen, enthalten.

**4.** Ester nach Anspruch 1 und 2
mit Bis-(monooxethylaten) des 2,6- bzw. des 1,5-Naphthalindiols, des 4,4'-Dihydroxy-biphenyls oder des 2,2'-Dihydroxy-biphenyls, d. h. mit 2,6- bzw. 1,5-Bis-(2-hydroxyethoxy)naphthalin, mit 4,4'- oder mit 2,2'-Bis-(2-hydroxyethoxy-)biphenyl.

**5.** Verfahren zur Herstellung der Ester nach einem der Ansprüche 1 bis 4,
dadurch gekennzeichnet,
daß man die 3-tert.-Butyl - bzw. 3-tert.-Butyl-5-alkyl-4-hydroxyphenyl(alkan)-carbonsäuren bzw. deren Derivate mit den Oxethylaten der Polyhydroxyaromaten in Gegenwart von an sich bekannten

(vorzugsweise basischen oder neutralen) Katalysatoren verestert bzw. umestert.

**6.** Verwendung der Ester nach einem der Ansprüche 1 bis 4 zur Stabilisierung von Polymeren.

**7.** Verwendung der Ester nach einem der Ansprüche 1 bis 4 zur Stabilisierung von Polyolefinen.

**8.** Verwendung der Ester nach einem der Ansprüche 1 bis 4 zur zur Stabilisierung von Polyethylen und Polypropylen.

**9.** Verwendung der Ester nach einem der Ansprüche 1 bis 4 zur Stabilisierung von Polymeren in einer Konzentration von 0,02 bis 3 Gewichtsprozent, vorzugsweise von 0,05 bis 2 Gewichtsprozent, bezogen auf das Polymere.

**Claims**

**1.** Esters of 3-tert.butyl- and 3-tert.butyl-5-alkyl-4-hydroxyphenyl-(alkane-)-carboxylic acids having the Formula I

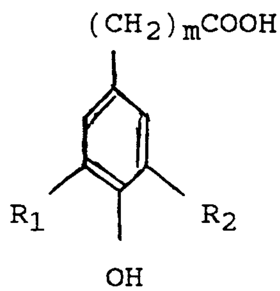

(I)

with

| | | |
|---|---|---|
| $R_1$ | = | $-C(CH_3)_3$, |
| $R_2$ | = | H, $C_1$ or $C_4$ alkyl, preferably $-C(CH_3)_3$, |
| m | = | 0 to 4, preferably 2, |

with oxethylates of polyhydroxy aromatics having 2 to 6 hydroxyl groups having the general Formulae II and III which contain a maximum of 6 alkylene oxide units,

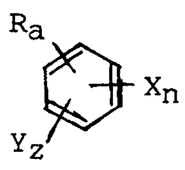

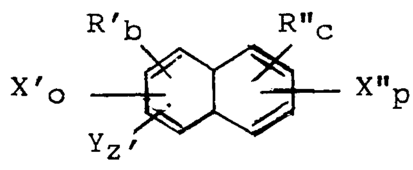

(II) (III)

with

| | | |
|---|---|---|
| X | = | $(CH_2)_mOH$ |
| X' | = | $(CH_2)_rOH$ |
| X" | = | $(CH_2)_sOH$ |
| R,R',R" | = | H, alkyl, halogen, |
| where m,r,s | = | 0 or 1, preferably 0, is possible |

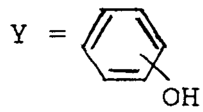

z = 1, n = 2 to 5, a = 5 - n (in Formula II) and
o + p = 2 to 6 for Z' = 0, preferably 2 or 3 (in Formula III) and
o + p = 1 to 5 for z' ≠ 0, preferably 2 or 3 (in Formula III) and
$0 \leqq b, c, z' \leqq 4 \leqq 8 - (o + p)$ (in Formula III)

**2.** Esters of 3-(3,5-ditert.butyl-4-hydroxyphenyl-)-propionic acid having the Formula Ia

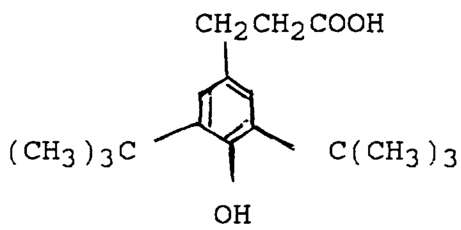

(Ia)

with oxethylates of polyhydroxy aromatics having 2 to 6 hydroxyl groups having the general Formulae II and III, preferably with m, r, s = 0.

**3.** Esters according to claims 1 and 2
with oxethylates of polyhydroxy aromatics having the Formulae II and III which contain an ethylene oxide unit (as a 2-hydroxyethoxy group) per hydroxyl group of the polyhydroxy aromatics, preferably such as have the Formula II having 2 or 3 hydroxyl groups.

**4.** Esters according to claims 1 and 2
with bis-(monooxethylates) of 2,6- and 1,5-naphthalene diol, 4,4'-dihydroxy-biphenyl or 2,2'-dihydroxy-biphenyl - i.e., with 2,6- and 1,5-bis-(2-hydroxyethoxy)-naphthalene, with 4,4'- or with 2,2'-bis-(2-hydroxyethoxy-)-biphenyl.

**5.** A process for the preparation of the esters according to one of claims 1 to 4,
characterized in that
the 3-tert.butyl- and 3-tert.butyl-5-alkyl-4-hydroxyphenyl-(alkane)-carboxylic acids and their derivatives are esterified or re-esterified with the oxethylates of the polyhydroxy aromatics in the presence of known (preferably basic or neutral) catalysts.

**6.** Use of the esters according to one of claims 1 to 4 for the stabilization of polymers.

**7.** Use of the esters according to one of claims 1 to 4 for the stabilization of polyolefins.

**8.** Use of the esters according to one of claims 1 to 4 for the stabilization of polyethylene and polypropylene.

**9.** Use of the esters according to one of claims 1 to 4 for the stabilization of polymers in a concentration of 0.02 to 3% by weight, preferably 0.05 to 2% by weight, referred to the polymer.

**Revendications**

**1.** Esters des acides 3-tert.-butyl ou 3-tert.-butyl-5-alcoyle-4-hydroxyphényl-(alcane)carboxyliques de formule I

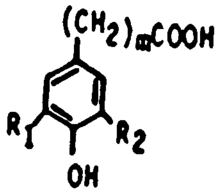

(I)

avec

R1 = $-C(CH_3)_3$

R2 = H, alcoyle en $C_1$ à $C_4$, de préférence-$C(CH_3)_3$

m = 0 à 4, de préférence 2

avec des oxoéthylates de polyhydroxyaromates avec de 2 à 6 groupes hydroxyle, de formules générales II et III qui renferment au maximum 6 unités d'oxyde d'alcoylène

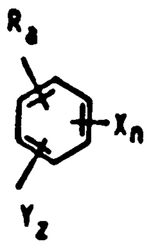

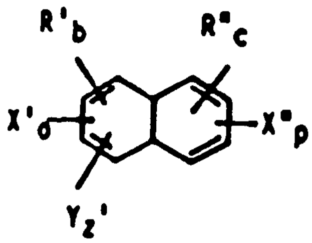

(II) (III)

avec

X = $(CH_2)_m$ OH

X' = $(CH_2)_r$ OH

X" = $(CH_2)_s$ OH

R, R', R" = H, alcoyle, halogène

pour lesquelles m, r, s peuvent être 0 ou 1, de préférence 0

Y = 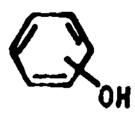 ,

z = 1, N = 2 à 5, a = 5 - n (dans la formule II) et

o + p = 2 à 6 pour z' = 0, de préférence 2 ou 3 (dans la formule III) et

o + p = 1 à 5 pour z' ≠ 0, de préférence 2 ou 3 (dans la formule III) et

0 ≦ b, c, z' ≦ 4 ≦ 8 - (o + p) (dans la formule III).

**2.** Ester de l'acide 3-(3,5-ditert.butyl-4-hydroxyphényl-)propionique de formule I

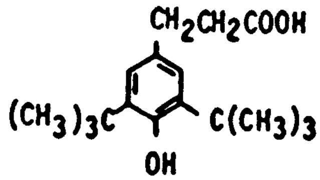

(Ia)

avec des oxoéthylates de polyhydroxyaromates ayant de 2 à 6 groupes hydroxyle de formules générales II et III, de préférence avec m, r, s = 0.

3. Ester selon la revendication 1 et 2, avec des oxoéthylates de polyhydroxyaromates des formules II et III qui renferment une unité d'oxyde d'éthylène (en tant que groupe 2-hydroxyéthoxy) par groupe hydroxyle des polyhydroxyaromates, de préférence ceux de formule II avec 2 ou 3 groupes hydroxyles.

4. Ester selon la revendication 1 et 2 avec des bis-(monooxoéthylates) du 2,6- ou du 1,5-naphtalènediol, du 4,4'-dihydroxy-biphényle ou du 2,2'- dihydroxy-biphényle c'est-à-dire avec le 2,6- ou le 1,5- bis-(2-hydroxyé-thoxy)naphtalène, avec le 4,4'- ou avec le 2,2'-bis-(2-hydroxyéthoxy-)biphényle.

5. Procédé pour l'obtention des esters selon l'une des revendications 1 à 4, caractérisé en ce que l'on estérifie ou transestérifie les acides 3-tert.-butyl ou 3-tert.-butyl-5-alcoyle-4-hydroxyphényl(alcane)-carboxyliques ou leurs dérivés, avec des oxoéthylates de polyhydroxyaromates en présence de catalyseurs connus en soi (de préférence basiques ou neutres).

6. Utilisation des esters selon l'une des revendications 1 à 4 pour la stabilisation des polymères.

7. Utilisation des esters selon l'une des revendications 1 à 4 pour la stabilisation des polyoléfines.

8. Utilisation des esters selon l'une des revendications 1 à 4 pour la stabilisation du polyéthylène et du polypropylène.

9. Utilisation des esters selon l'une des revendications 1 à 4 pour la stabilisation des polymères à une concentration de 0,02 à 3 % en poids, de préférence de 0,05 à 2 % en poids rapporté au polymère.